# EUROPEAN PATENT SPECIFICATION

(11) **EP 0 617 702 B1**
(45) Date of publication and mention of the grant of the patent: **07.02.1996**
(21) Application number: 92901169.0
(22) Date of filing: 17.12.1991
(51) Int. Cl.: C03C 8/16, C04B 41/50

(54) **HIGH PRODUCTIVITY CERAMIC GLAZE**
KERAMISCHE GLASUR MIT HOHER PRODUKTIVITÄT
EMAIL A RENDEMENT ELEVE POUR PRODUITS EN CERAMIQUE

(43) Date of publication of application: 05.10.1994
(73) Proprietor: AQUALON COMPANY, Wilmington Delaware 19850-5417 (US); SCHWEIZER, Dieter, D-40237 Düsseldorf (DE); SORG, Claudia, D-40225 Düsseldorf (DE)
(72) Inventor: SCHWEIZER, Dieter, D-4000 Düsseldorf (DE); HOPF, Claudia, D-40789 Monheim (DE)
(74) Representative: Jönsson, Hans-Peter, Dr.
(86) International application number: EP9102429
(87) International publication number: WO9312047

(56) References cited:
- EP-A- 0 295 628
- US-A- 4 994 112
- CHEMICAL ABSTRACTS, vol. 98, no. 16, 18 April 1983, Columbus, Ohio, US; abstract no. 131172D, page 298;
- CHEMICAL ABSTRACTS, vol. 103, no. 6, 12 August 1985, Columbus, Ohio, US; abstract no. 41350C, page 263;

## Description

This invention relates to a glaze for ceramic articles. In particular the invention relates to a high productivity ceramic glaze for sanitary ceramic articles.

Hydrophobically modified hydroxyethylcellulose is known from U.S. 4,228,277 to be a clear effective thickener in latex paint compositions and shampoos. Since the time of the initial discovery of these associative thickeners, additional applications have been discovered such as paper coating compositions, etc.

Ceramic greenware can be decorated and coated with a variety of glazes prior to firing. When sanitary ceramic articles are produced, the glaze must meet the same exacting requirements as for decorative ceramic articles. Sinks and toilets must be fired using glazes meeting sanitary requirements and be suitable for extended service.

Cellulose ethers and xanthan gums have been used as thickeners and binders for such sanitary ceramic glazes. Upon firing, these polysaccharides decompose and form the glaze glass and metal oxide deposit on the ceramic article. Varial® ceramic glaze, for example, is a blend of approximately 20% xanthan gum with 80% sodium polyphosphate, available from Chemische Werk Tübingen of Germany.

A particularly useful sanitary ceramic glaze comprises feldspars, clays, kaolin, quartz metal oxides and frits all together called ceramic raw materials. These ceramic raw materials are suspended in water and stabilized by a mixture of xanthan gum and sodium polyphosphate. Yet even with its advantages and demonstrated utility there were problems of high cost and limited workability. It remained for the present invention to provide a high value in use of sanitary ceramic glaze which could overcome the disadvantages of the prior art.

It is an object of the invention to provide a sanitary ceramic glaze comprising a thickening amount of a hydrophobically modified hydroxyethylcellulose ether having a hydroxyethyl Molar Degree of Substitution (M.S.) between 1.5 and 4.5 and a weight percent hydrophobic modification between 0.1 and 2.0.

A preferred ceramic glaze comprises in percent by weight water 20 to 60, ceramic raw material 40 to 80, hydrophobically modified hydroxyethylcellulose 0.05 to 2.0, sodium polyphosphate optional 0 to 10, and preservative 0.01 to 0.2.

The advantages provided with the use of the glaze include lower cost, shorter drying time, improved sag and run resistance, reduced foam formation (reduced pinholes), and greater binder resistance. The glaze is storage stable for up to 3 to 4 months and has a yield value, i.e., high viscosity at zero shear.

It has been discovered that a superior rheology of a ceramic glaze can improve productivity for sanitary products in particular. Of advantage is a yield point to prevent or reduce settling. For the flow characteristics pseudoplasticity at high shear is desired to reduce wear of equipment especially for spray application. The unique properties for the glaze are provided by suitable grades of hydrophobically modified hydroxyethylcellulose.

Suitable materials are available from the Aqualon Company as Natrosol® Plus HM hydroxyethylcellulose. In particular, grades 330 and 430 have demonstrated outstanding results in this particular application. Other suitable materials include Spatterguard® hydrophobically modified hydroxyethylcellulose from Union Carbide and Bermocol® EH 100 hydrophobically modified ethylhydroxyethylcellulose from Berol Nobel.

The properties provided by these cellulose ethers modified with alkyl or arylalkyl hydrophobes include a yield point to prevent or reduce sedimentation of glaze, thixotropy, stabilization against microbiological attack and stability against dispersants such as borax.

Several terms, definitions and physical measurements in common use within the ceramic industry have meanings and applications which require explanation for lay persons. Glue, for instance, is a general term for a binder. Sedimentation behavior refers to the stability of the glaze to suspend the ceramic raw materials. Casson or Bingham shear thinning bodies refer to the rheology of a system which is pseudoplastic once flow commences after the yield point.

Pinholes in the surface of the fired sanitary articles are caused by foam bubbles. These unsatisfactory articles must be recoated and refired to correct this problem. However, productivity is increased using the glazes of the invention because a thicker glaze coating can be applied which exhibits superior flow, thus producing fewer pinholes than the glazes of the prior art.

Glazes containing these cellulose ethers modified with aryl and arylalkyl hydrophobes can be applied by spraying or dripping to provide a thicker but faster drying coating with improved leveling and superior run and sag resistance. In addition, less pinholes are observed. The glazes have a yield point which prevents settling due to sedimentation. A further advantage is the microbiological stability of these cellulose ethers and their high tolerance to borax which is often used in the glazes as a dispersant. While it is not known with certainty, it is believed that the associative nature of these hydrophobically modified cellulose ethers allows higher glaze structure to occur, but with less water binding power, which permits water to transfer more rapidly into the ceramic article.

Typical ingredients for a ceramic glaze in use prior to the present invention included ceramic raw materials suspended in a viscosifying mixture of xanthan gum and sodium polyphosphate. After firing, a white or colored protective surface remained on the ceramic material.

The new binder gives the glaze "Stehvermögen" which is the German word to define the new and useful properties of the invention. Expressed in English this means a thick viscous glaze with the properties of good leveling and sag and run resistance which contribute to high productivity and lower rework.

The invention has industrial applicability in the field of ceramics manufacture. The following Preparations and Examples illustrate the practice of the invention, without being limiting.

### PRIOR ART PREPARATION

The following ingredients were mixed in order to prepare a glaze suitable for sanitary ceramic articles or decorative tile.

| | |
|---|---|
| Water | 35g |
| Ceramic raw material | 65g |
| Xanthan gum | 0.2g |
| Sodium polyphosphate | 0.8g |

The glaze had a flow viscosity of 5000 mPas at a shear rate of 10 sec⁻¹ and a viscosity of 825 mPas at a shear rate of 100 sec⁻¹.

### INVENTION PREPARATION

The following ingredients were mixed in order to prepare a glaze suitable for sanitary ceramic articles or decorative tile.

| | |
|---|---|
| Water | 35g |
| Ceramic raw materials | 65g |
| Natrosol® Plus 430 HMHEC available from Aqualon | 0.21g |
| Sodium Polyphosphate | 0.83g |

The glaze had a flow viscosity of9400 mPas at a shear rate of 10 sec⁻¹ and a viscosity of 868 mPas at a shear rate of 100 sec⁻¹.

### EXAMPLE 1

A variety of sanitary ceramic manufactured articles (toilets, sinks, bathtubs) were sprayed with both the Prior Art Preparation (controls) and the Invention Preparation (experiment). A visual comparison of these tests revealed that the experimental materials dried faster and provided a thicker glaze coating which displayed a lower tendency to run or sag as well as containing fewer foam bubbles.

Article sprayed with the Invention Preparation dried in from 1 to 1.5 minutes compared with from 2 to 3 minutes for articles sprayed with the Prior Art Preparation. These articles could thus be handled sooner and placed in the oven sooner for firing. In addition fewer fired articles sprayed with the Invention Preparation contained objectional pinholes or runs such that rework was required wherein the article was again sprayed, dried and fired to eliminate defects.

### EXAMPLE 2

Unglazed ceramic tiles were both dipped and sprayed with control and experimental ceramic glazes. When the glazes had dried, these samples were fired in a 1000-1400°C oven for 0.5 to 4 hours.

Visual inspection of both the control and experimental tiles revealed overall superior quality for the glaze containing hydrophobically modified hydroxyethylcellulose associative thickener.

## Claims

1. A ceramic glaze comprising a thickening amount of a hydrophobically modified hydroxy ethyl cellulose ether having a hydroxy ethyl molar degree of substitution (M.S.) between 1.5 and 4.5 and a weight percent hydrophobic modification between 0.1 and 2.0.

2. The ceramic glaze of claim 1 where the hydroxy ethyl cellulose ether is hydroxy ethyl cellulose or ethyl hydroxy ethyl cellulose.

3. The ceramic glaze of claim 1 used for sanitary ceramic articles.

4. The ceramic glaze of claim 3 containing on a weight percent basis:
| | |
|---|---|
| Water | 30-40 |
| Ceramic raw materials | 60-70 |
| HMHEC | 0.1-0.5 |
| Sodium Polyphospate | 0-10 |

5. A process for glazing sanitary ceramic articles comprising the steps:
(1) spraying an unglazed ceramic article with an aqueous glaze of a ceramic raw material selected from the group of feldspars, clays, kaolin, quartz, metal oxides, frits and hydrophobically modified hydroxyethylcellulose as defined in claim 1 and optional sodium polyphosphate;
(2) drying until the article can be handled without marring the surface glaze; and
(3) firing to produce a glazed sanitary ceramic article.

6. The process of claim 5 where the glaze has a percent solids of 40 to 80 and a flow viscosity of 4000-10000 mPas at a shear rate of 10 sec⁻¹ and a viscosity of 700-1000 at a shear rate of 100 sec⁻¹ at 20°C.

## Patentansprüche

1. Keramische Glasur, umfassend eine verdickende Menge eines hydrophob modifizierten Hydroxyethylcelluloseethers mit einem molaren Hydroxyethyl-Substitutionsgrad (M.S.) zwischen 1,5 und 4,5 und einer gew.-proz. hydrophoben Modifizierung zwischen 0,1 und 2,0.

2. Keramische Glasur gemäß Anspruch 1, worin der Hydroxyethylcelluloseether Hydroxyethylcellulose oder Ethylhydroxyethylcellulose ist.

3. Keramische Glasur gemäß Anspruch 1, die für Sanitärkeramik-Gegenstände verwendet wird.

4. Keramische Glasur gemäß Anspruch 3, die auf einer gew.-proz. Basis enthält:
| | |
|---|---|
| Wasser | 30-40 |
| keramische Rohmaterialien | 60-70 |
| HMHEC | 0,1-0,5 |
| Natriumpolyphosphat | 0-10. |

5. Verfahren zum Glasieren sanitärer Keramik-Gegenstände, umfassend die Stufen:
(1) Besprühen eines nicht-glasierten keramischen Gegenstandes mit eine wäßrigen Glasur eines keramischen Rohmaterials, das aus der Gruppe, bestehend aus Feldspäten, Tonen, Kaolin, Quarz, Metalloxiden, Fritten ausgewählt ist, und hydrophob modifizierter Hydroxyethylcellulose gemäß Anspruch 1, und gegebenenfalls Natriumpolyphosphat;
(2) Trocknen bis der Gegenstand gehandhabt werden kann, ohne daß die Oberflächenglasur beschädigt wird, und
(3) Brennen, um einen glasierten, keramischen Sanitärgegenstand zu erzeugen.

6. Verfahren gemäß Anspruch 5, worin die Glasur einen prozentualen Feststoffgehalt von 40 bis 80 und eine Fließviskosität von 4000-10 000 mPa·s bei einer Schergeschwindigkeit von 10 s⁻¹, und eine Viskosität von 700-1000 bei einer Schergeschwindigkeit von 100 s⁻¹ bei 20°C hat.

## Revendications

1. Email céramique comprenant une quantité épaississante d'un éther d'hydroxyéthylcellulose à modification hydrophobe, ayant un degré molaire de substitution (M.S.) hydroxyéthyle de 1,5 à 4,5 et un pourcentage en poids de modification hydrophobe de 0,1 à 2,0.

2. Email céramique suivant la revendication 1, dans lequel l'éther d'hydroxyéthylcellulose consiste en hydroxyéthylcellulose ou éthylhydroxyéthylcellulose.

3. Email céramique suivant la revendication 1, utilisé pour des articles céramiques d'hygiène.

4. Email céramique suivant la revendication 3, contenant en pourcentage en poids :
| | |
|---|---|
| Eau | 30-40 |
| Matières premières céramiques | 60-70 |
| HMHEC | 0,1-0,5 |
| Polyphosphate de sodium | 0-10 |

5. Procédé pour émailler des articles céramiques sanitaire, comprenant les étapes consistant :
(1) à pulvériser sur un article céramique non émaillé un émail aqueux constitué d'une matière première céramique choisie dans le groupe consistant en feldspaths, argiles, kaolin, quartz, oxydes métalliques, frittes et hydroxyéthylcellulose à modification hydrophobe répondant à la définition suivant la revendication 1 et, facultativement, du polyphosphate de sodium ;
(2) à effectuer un séchage jusqu'à ce que l'article puisse être manipulé sans altération de l'émail en surface ; et
(3) à effectuer une cuisson pour produire un article céramique sanitaire émaillé.

6. Procédé suivant la revendication 5, dans lequel l'émail a un pourcentage en matières solides de 40 à 80 et une viscosité en écoulement de 4000 à 10 000 mPa.s à une vitesse de cisaillement de 10 s⁻¹ et une viscosité de 700 à 1000 mPa.s à une vitesse de cisaillement de 100 s⁻¹ à 20°C.
